# EUROPEAN PATENT APPLICATION

(11) **EP 1 650 688 A1**
(43) Date of publication of application: **26.04.2006**
(21) Application number: 05109611.3
(22) Date of filing: 17.10.2005
(51) Int. Cl.: G06F 17/50

(54) **Automatic addition of power connections to chip power supply network**

(30) Priority: 20.10.2004 EP 04105193
(71) Applicant: International Business Machines Corporation, Armonk, N.Y. 10504 (US)
(72) Inventor: Noack, Jens, 70563 Stuttgart (DE); Keinert, Joachim, 71155 Altdorf (DE); Pille, Jürgen, 70199 Stuttgart (DE); Schweizer, Christian, 70569 Stuttgart (DE)
(74) Representative: Teufel, Fritz

(57) **Abstract**

The present invention relates to the development of digital Integrated Circuits (IC), particularly to a method applied during a multi-layer, digital Integrated Circuit Chip design procedure, in which the chip design is developed in a predetermined sequence of multiple workflow design phases effective at least on either of macro level, unit level and chip level, wherein each design phase imposes design constraints for the next higher-level phase by occupying respective phase-specific chip layer areas. In order to improve the flexibility during chip design it is proposed to:
a) offering a current design phase a view into at least one of respective preceding design phases, said view disclosing details of the metallization layers and enabling for recognizing in said preceding design phase free chip layer areas, which are not yet occupied by circuit means, and
b) offering to perform further design optimization by a reprocessing of said recognized free areas, created by one of said preceding design phases.

This method can be advantageously applied for improving electrical properties in chip wirings, when a first design phase is provided for implementing a basic form of a power grid (40) in a power grid layer (M4) for supplying the electrical circuits with electrical power, and one or more subsequent design phases are provided for signal wiring and clock wiring. Then, said view-offering step and said reprocessing step may be used for implementing an additional power wiring (50) within said layer of the basic power grid (40).

## Description

### 1. BACKGROUND OF THE INVENTION

### 1.1. FIELD OF THE INVENTION

The present invention relates to the development of digital or analogue Integrated Circuits (IC). In particular, it relates to a method and system to be applied during a multi-layer, digital Integrated Circuit Chip design procedure, in which the chip design is developed in a predetermined sequence of multiple workflow design stages effective at least on either of macro level, unit level and chip level, wherein each design stage imposes design constraints for the next higher-level stage by occupying respective stage-specific chip layer areas.

### 1.2. DESCRIPTION AND DISADVANTAGES OF PRIOR ART

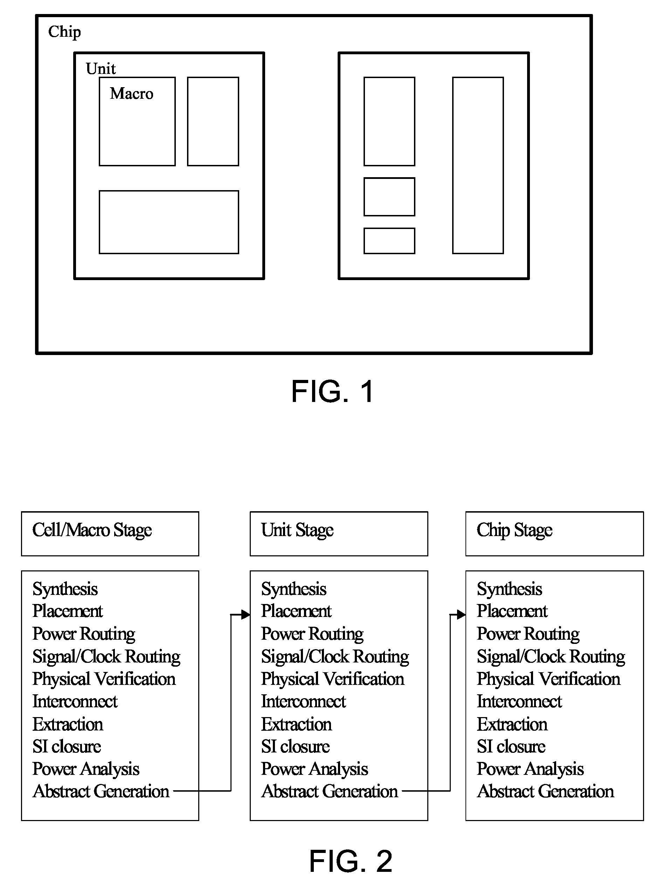

Today's Integrated Circuit (IC) chip design methods are based on developer program tools, covering the whole range of the chip development in a work flow comprising a sequence of multiple development stages. Mostly, a stage takes as input the result of a preceding stage, whereby a hierarchical development workflow is introduced. Even with a so-called flat design, there are at least cells and macros to be placed at the chip level, therefore at least two levels of hierarchy exist, i.e. cell/macro and chip.
This hardware hierarchy is schematically shown in figure 1.

Usually, the chip design process consists of several design stages that relate to the hierarchy and it is usually done bottom up. On each level of hierarchy, the workflow is similar.

A state-of-the-art developer's work bench is disclosed at:
http://www-306.ibm.com/chips/techlib/techlib.nsf/techdocs/54EB563D93AABEC38 7256E9B0072745C/$file/IBM-Cadence90nmRefFlow5-21.pdf

This prior art developer's work bench includes electronic program tools, which implement the sequence of the following phases:
RTL synthesis, which creates a logic netlist;
Silicon virtual prototyping and physical synthesis, which maps to technology;
Placement of the cells and macros at higher hierarchy levels or of transistors at the lowest hierarchy level;
Routing of power, signal and clock wiring);
Physical verification Comprising Design Rule Check (DRC), Layout versus Schematic (LVS) check;
   Interconnect parasitic extraction,
   SI closure, comprising Signal integrity and timing analysis; Power analysis, comprising power drop and noise analysis;
At lower levels of hierarchy only the following phases are performed:
   The generation of layout abstracts for next design phases;

This sequence of design phases or at least similar variations thereof are repeated in different levels of hierarchy and design stages as shown in figure 2. Disadvantageously, only a layout abstract instead of all details is taken to the next design stage.

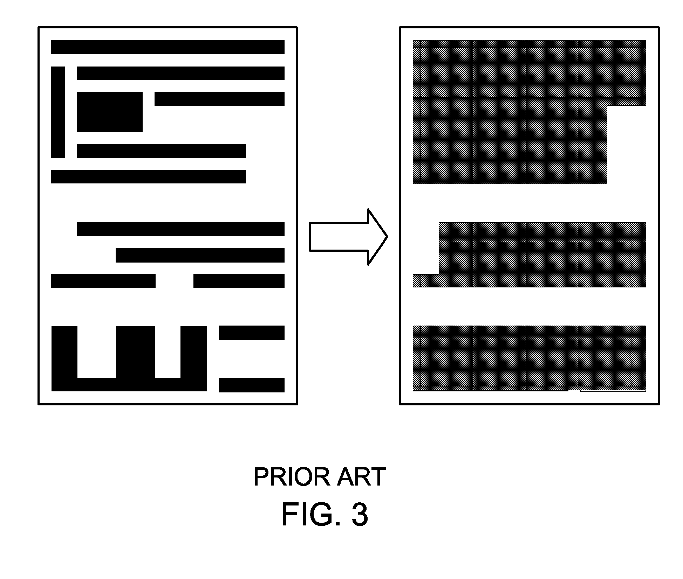

Figure 3 is given to illustrate the process of abstraction taking place during before-mentioned chip design. On the left, the layout view of a wiring layer of macro is shown. This view is transformed to a layout abstract on the right side. This abstract view is used in the next level of hierarchy (unit) for wiring of power, signals and clocks. As shown, detailed information about the wiring of the macro, which is symbolized by the plurality of different rectangles and the geometric arrangement thereof, is not available to the subsequent unit level.

In simpler words, a chip is planned in a bottom-to-top hierarchy sequence of development stages. The bottom-most stages include the use of so-called cells and books, which store information about already existing, tested, and practice-proved subcircuits, i.e., a kind of circuit library.
Elements thereof are selected for synthesizing the chip on a macro-level.
Multiple macros are then composed to synthesize a so called unit, which implements some functional context, as e.g., an adder circuit, a storage area including read and write access circuitry, bus structures, etc.
Multiple units are then composed to represent that what is called an electronic Integrated Chip (IC), which is to be installed in a computer's motherboard for example.

In a more physical view on the chip itself, the bottom-most hierarchy level (leaf cells) built in the first development stage comprise the definition of the basic transistor layers of the chip.

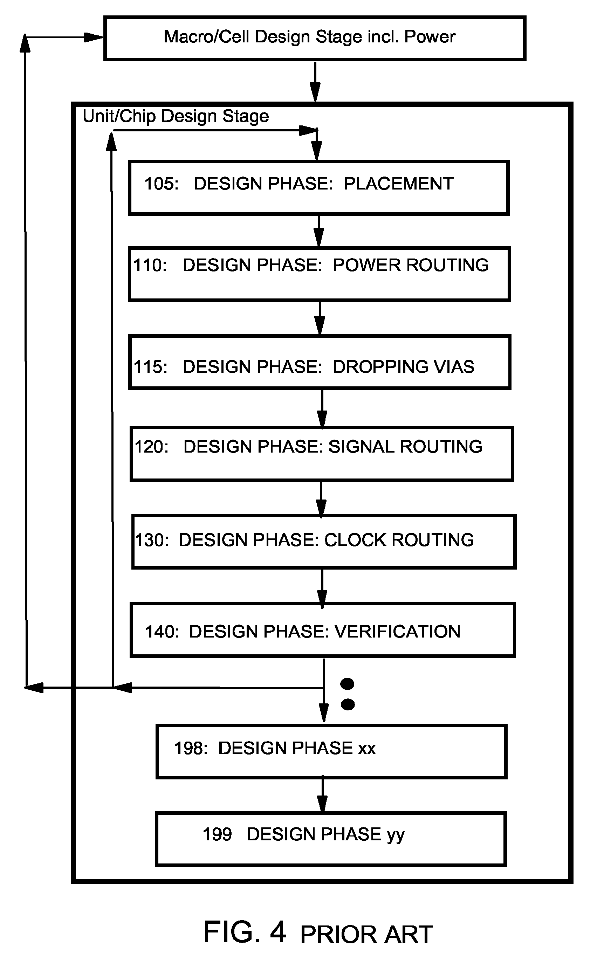

Figure 4 illustrates prior art design phases in a comprehensive view.
First, on cell or macro design stage, the cell or macro design is done including power wiring design.

Then in a step 105 of the unit or chip design stage those cells and units are subjected to a placement procedure.
The metallization layers above the basic transistor layers usually include metallization grids or at least grids out of a conductive material, for the supply (step 110) of the transistors with power possibly on different voltage levels. For instance, one grid may be provided for normal chip operation (Vdd1), another one for a stand-by operation mode (Vdd2) or a power-save mode (Vdd3), and a grounded wiring grid (GND). The signal wiring, see step 120, is done in a step after the power routing, and the clock wiring 130, and diverse electrical isolation layers intersected between said layers.

Then, a plurality of further design phases denoted as xx, yy, the contents of which are not of particular interest, are performed in respective steps 140, ...198, 199 with different design tools.

A major disadvantage of this prior art chip design tools is that each of the above-mentioned chip development stages is "self-contained", i.e., detailed information is not transferred from one level to the next level of hierarchy, but only an abstracted view thereof.

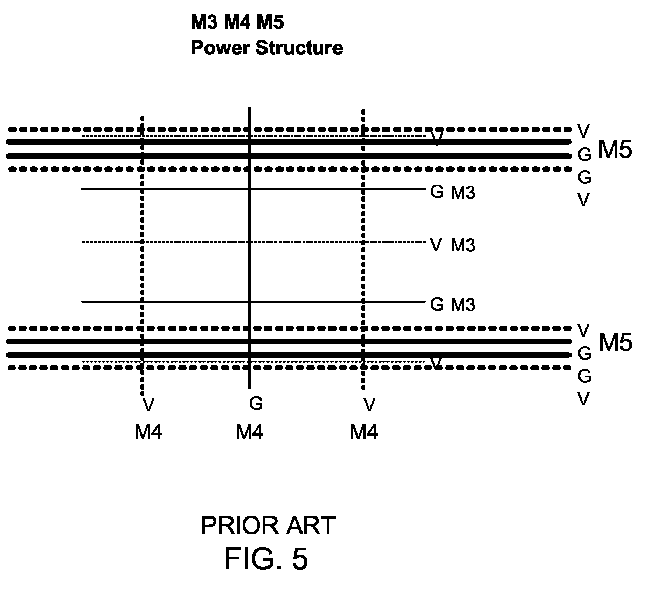

Figure 5 is a schematic zoom view into a respective prior art power supply structure of a subset of metallization layers named M3, M4, M5 of a digital Integrated Circuit chip, as it is developed according to figure 4.

A metallization layer M3 may be assumed to be the bottom-most layer of the drawing. It comprises an alternating series of parallel wiring of two types, the first of which is the supply voltage abbreviated with V and the second is the ground level voltage (GND), abbreviated as G in the drawing. This wiring is depicted horizontally.

Then a next metallization layer M4 located above M3 is depicted having a wiring perpendicular to the wiring in layer M3. This horizontally depicted wiring is also an alternating sequence of the pattern V - G - V - G, etc.

Then, a further metallization layer M5, again above M4, is depicted having a horizontally oriented wiring, wherein always pairs of ground voltage wirings "GG" are surrounded by a single supply voltage wiring "V", again any wiring parallel to each other. Thus, in M5 a wiring pattern results like: V - G - G - V, which is repeated multiply in a given chip area, of which only a zoom view is depicted in figure 2.

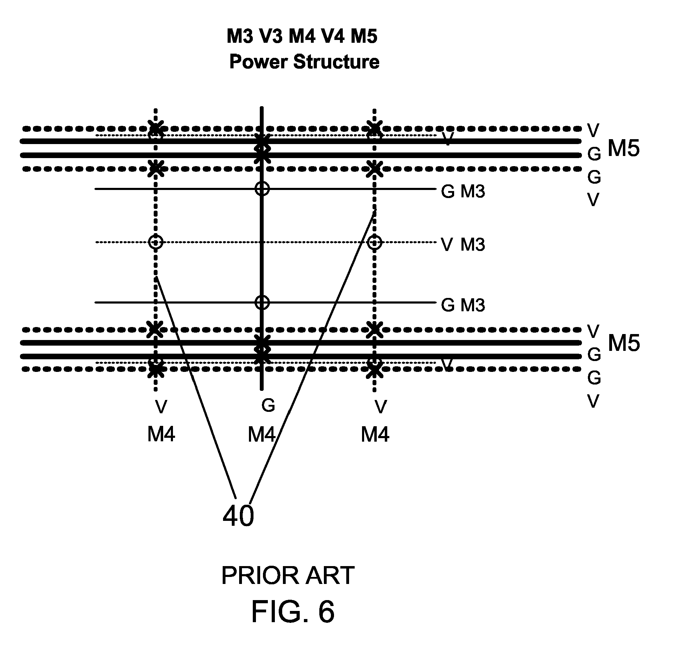

With reference to figure 6 the circles depicted in the drawing shall represent vias, which connect between layer M4 and layer M3 at cross points of wires of the same potential.

Also, the vias connecting between M4 and M5 are depicted with crosses. A via thus represents a perpendicularly extending metallized connection between wiring of the same potential in different metallization layers.

With reference back to figure 4 and the layer structure in figures 5 and 6, the following sequence of design steps is performed in prior art at the unit and chip level:

First, some chip area is reserved for the power grid 40, denoted as "V", which is then generated in these reserved areas, phase 110. This is true for any metallization layer. In a second design phase 115 multiple vias are dropped as it was described before with reference to figures 5 and 6. Then the signal wiring is designed, see phase 120, to be located in some remaining chip areas on the metallization layers which areas are not yet occupied by the power grid.

Then, the clock wiring is designed in a phase 130 in an analogous way to the signal wiring.

Further, in a next phase 140, verification takes place, verifying if the number of dropped vias is large enough in order to bring the supply voltage to the transistors in the basic transistor layer (not depicted in the drawings). If not sufficient, the number of dropped vias must be increased. For that step, in prior art the design procedure does not provide a possibility to go back from phase 140 to phase 115, in which additional vias may be dropped. Instead, a change in the power image is necessary, i.e. redo phase 110. Or at the lower level of hierarchy, the according previous design stage has to be redone.

Then, in a next phase 198 an additional filling of empty tracks is performed in prior art, in order to avoid the "dishing" effect, for example on metallization layer M4. Such dishing effect may otherwise happen during the metal planarization using the prior art chemical-mechanical polishing (CMP production technique).
A further design phase 199 is given to illustrate further design phases not relevant for the actual purpose of the present invention.

As reveals from the above explanations, the design stages are "self-contained" and only abstracted views without detail information are passed to the next design stage, in the sense, that they do not allow to step back, from a later into an earlier design stage without having to redo both design stages.

As a disadvantageous consequence resulting from said above-mentioned fact of "self-containment", once a given stage has generated its specific output result, optimized according to individual technical needs, e.g., low power consumption, signal quality, speed, etc, within a given stage, this "stage-specific" result cannot be modified anymore by one of the following development tools offering one of the next higher development stages. This is a considerable obstacle for further chip design optimization.

### 1.3. OBJECTIVES OF THE INVENTION

It is thus an objective of the present invention to provide a chip design work bench for the whole chip design or at least for the design of parts of it, i.e. for the macro level or unit level or chip level, having an improved flexibility.

### 2. SUMMARY AND ADVANTAGES OF THE INVENTION

This objective of the invention is achieved by the features stated in enclosed independent claims. Further advantageous arrangements and embodiments of the invention are set forth in the respective subclaims. Reference should now be made to the appended claims.
The following definitions are given in order to provide for technical clearness of the present disclosure:
A "level" means some item of a hardware hierarchy, see figure 1, specifying three distinct levels: macro, unit and chip.
A "step" is to be understood as a part of a method claim, for example a part in the inventional preferred algorithm.
A "phase" is in relation to "stage" a more granular section of the design procedure, e.g., the "power routing", or "signal routing" in relation to the total design of a macro. Both are time-defined sequences of design work.
A "layer" is a space-defined term specifying a single-thickness coating constituting one of a plurality of chip layers.
According to its basic aspect the present invention discloses a method as described in the preamble of claim 1, which comprises these features:
   a) offering in a current design phase a view of at least one of respective preceding design phases, said view disclosing details of the metallization layers and enabling for recognizing in said preceding design phase free -"white space"- chip layer areas, which are not yet occupied e.g., by circuit means, like wirings, vias, transistors,
   b) offering to perform further design optimization by a reprocessing of said recognized free areas, created by one of said preceding design stages created by one of said preceding design stages. This is proposed for using said free space for electrical and chip fabrication yield optimization purposes.

Said reprocessing is preferably an additional application of some conductive material in these free layer areas, in order to improve the electrical qualities of the chip. In most cases this will be an additional metallization step, wherein free tracks are filled with a metal. Also, other conductive materials are applicable for this purpose, for example conductive polymers.

A further type of reprocessing can be achieved as follows: When using a negative mask, metallization may be also removed from a previous design stage's hierarchy level. For example to achieve a lower target metal density or to open free space for additional signal/clock wiring tracks at the next hierarchy level.

Further, the reprocessing may also include steps, which are per se known in prior art, directed to other improvements, e.g., for increasing the form stability of a layer during a later CMP process.

By this general approach, the fixed design hierarchy is effectively dissolved in order to do additions to the wiring of a lower level, after having completed the design on a higher level. Thus, a kind of "late" resume step is introduced by the invention, which is based on the fact that detailed information from a preceding design phase is made available in a current phase.

This basic approach can be done in a single tool specialized to the design of macros, or in a tool dedicated for the design of units, or in an integrated developer's working bench offering a respective integrated solution, i.e. at various design stages and phases at various levels of hierarchy.
While the detailed data from a previous design stage remains in that hierarchy level, the additions and removals to the metallization and via layers are put into the current design stage's hierarchy level.

Further, a particular application of the general approach is to add an additional power grid or power wiring to the "traditionally" provided power grid in a more or less area-filling form, e.g., rectangle-, L-, form, or any other more complicated geometry, after having accomplished the chip design at a respective higher level, for example after completion on the chip level, or unit level. This can be done, as enough free space remains in most cases ("white space") within the power grid layer. By that the power distribution is remarkably improved, the power noise is reduced, a higher fabrication yield is achieved and a deeper sorting of the fabricated chips, thus differentiating between different quality levels (speed, signal quality, etc.) is made available.

Such additional grid can also be added at various different voltage levels, e.g., GND-, or intermediate power levels, in order to provide a good power supply also for lower power levels in stand-by mode, sleep mode etc..

Further, assuming a "grid" to be a basically meshless arrangement of more or less parallel wiring structure, this method can also be applied to any meshed wiring, i.e. comprising a considerable number of closed loops within its geometrical structure. Thus, for instance a clock grid can also be implemented according to the same principle.

Further, it is to be understood by a skilled reader that before-mentioned design optimization means, which may take place according to the invention is independent of the material used therein. Thus, often an additional metallization may take place in order to improve the electrical properties of the chip due to a decreased resistance, inductance, etc. of respective electrical wiring. But also, other conductive materials may be applied for the same purpose.

### 3. BRIEF DESCRIPTION OF THE DRAWINGS

The present invention is illustrated by way of example and is not limited by the shape of the figures of the drawings in which:
Figure 1 is a schematic diagram representing the prior art hardware hierarchy in chip design,
Figure 2 is a schematic diagram representing respective prior art development phases in a workflow in a chip design comprising three development stages,
Figure 3 is a schematic diagram symbolizing the loss of detail information in a prior art workflow in chip design, when moving from one to another stage,
Figure 4 is a schematic diagram representing details of prior art workflow in chip design,
Figure 5 is a schematic diagram representing a partial view into prior art power supply structure of metallization layers named M3, M4, M5 of a digital Integrated Circuit chip,
Figure 6 is a schematic diagram according to figure 2, including vias dropped between layer M5 and M3 (prior art),

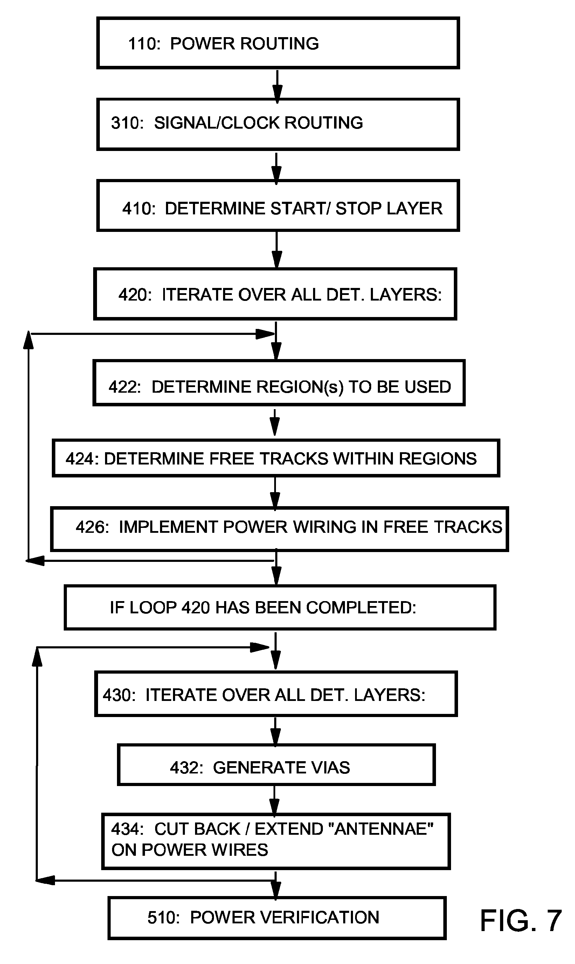

Figure 7 is a schematic control flow diagram, showing the essential steps in an algorithm of the invention used in a respective inventional design tool, in order to implement an inventional resume step into a preceding design phase, and applied for an additional power grid on metallization layer M4;

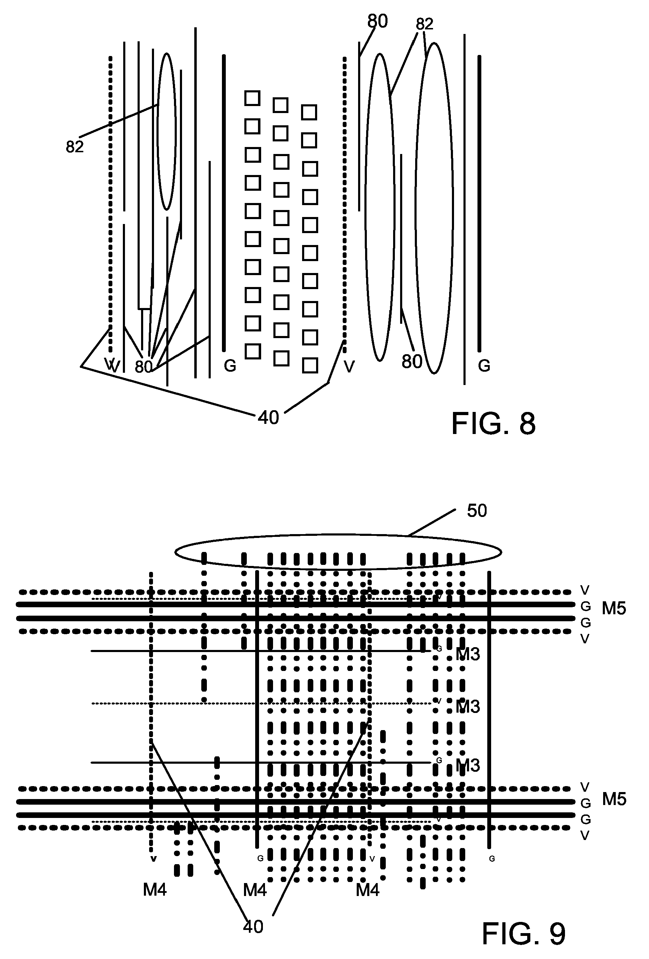

Figure 8 is schematic diagram representing a partial view into prior art power supply structure, signal wiring and power fill in a layer M4 of a digital Integrated Circuit chip;

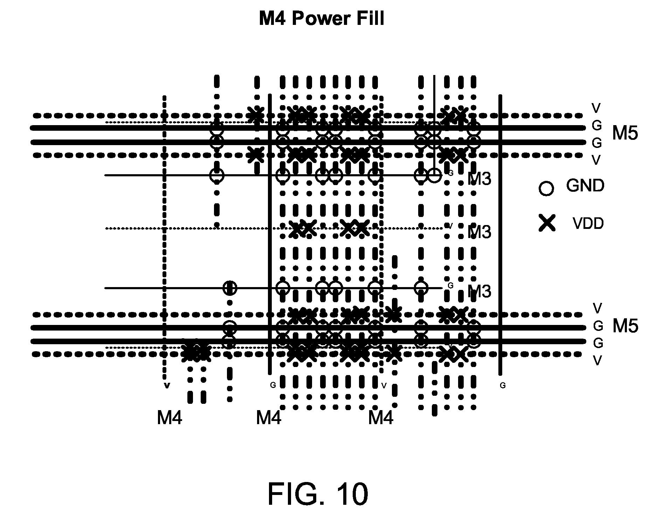

Figure 9 is a schematic diagram according to figure 8, representing the inventional feature of adding a fill pattern of power lines after the rest of the chip design procedure was per se completed;
Figure 10 is a schematic diagram including the vias according to figure 3;

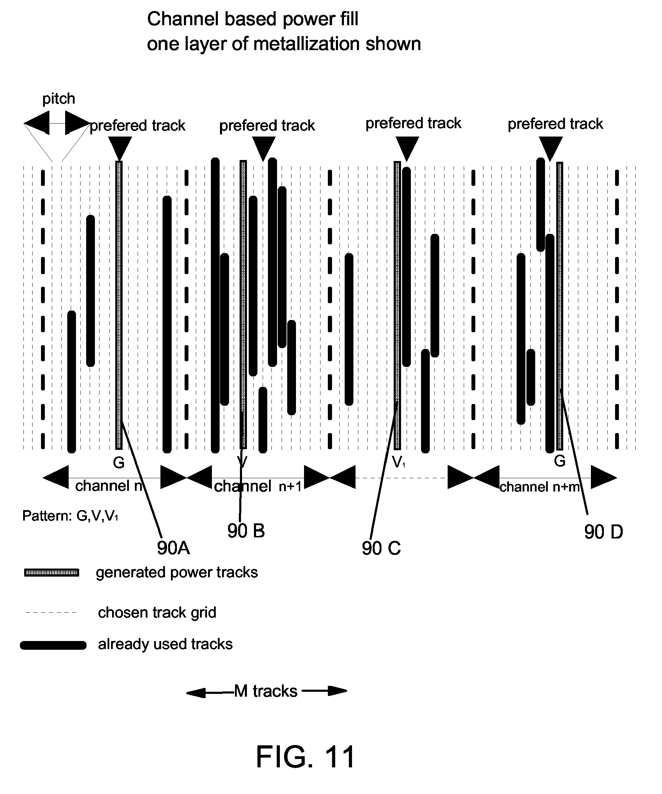

Figure 11 is a schematic diagram showing details of a channel based power wiring fill in a single metallization layer; and

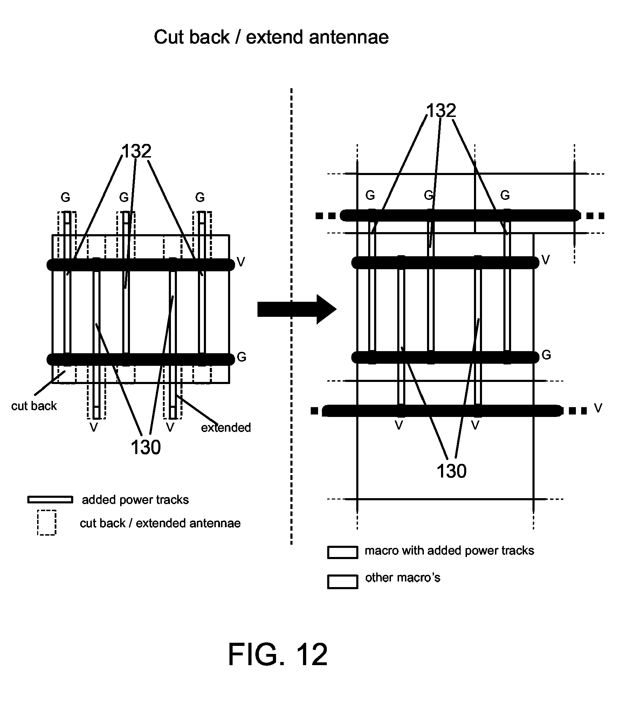

Figure 12 is a schematic diagram showing details of cutting back or extending "antennae like wiring applied on borders of a unit or a macro.

### 4. DETAILED DESCRIPTION OF THE PREFERRED EMBODIMENT

With general reference to the figures and with special reference now to figure 7 an exemplary algorithm is disclosed which can be used according to the above-mentioned principles in addition or instead of the sequence of steps described along with figure 4, in order to improve the computer-aided design of chips, macros, regions of chips or macros, further for all metallization and via layers, or a subset of such layers, further for Ground (GND), primary supply (VDD) and other power voltages, or a subset of these power grids. Basically, this algorithm may be applied for such semiconductor designs with several layers of metal, with or without alternating wiring directions of the metal layers, be that horizontal and vertical or a combination thereof including or not including diagonal wiring directions.

After power routing in a phase 110, resulting in a basic power grid 40 (see figure 6), and after signal/clock routing in a phase 310 have been laid out, the inventional algorithm starts.

In a first step 410 of the preferred algorithm the start and stop layer for the inventional algorithm is determined. For example the start layer may be M3 and the stop layer may be M5.

In a second step the iteration 420 takes place over the predetermined layers (step 410) from bottom to top or vice versa. This iteration includes the steps or block of steps 422, 424, 426. Details of these steps are given next below.

In a first step 422 the start position and end position of the region and the maximum track span is determined, in which the inventional algorithm shall be applied. For example for a vertical wire the x- coordinates for start and stop and the y-co-ordinates for the track span is defined. Further, there may be defined more than only one area within one and the same layer which are subjected to the inventional procedure.

Then, in a next block of steps 424 the free tracks are determined, which are present within the areas determined in step 422 above.

In order to do that there are basically two alternatives: in a first alternative the geometrical area difference is determined by comparing the "bounding box" or boxes determined in step 422 above and subtracting the existing wiring (including the respective metal and via spacing). In a second alternative the free tracks may be looked up from the power and signal or clock router within the used design tool.

In a step 426 the additional power wiring is implemented in either of two alternatives:
First alternative: A predetermined power pattern like "GGG VVV GGG VVV" is laid over the bounding box and intersected with the free tracks on the same layer just as described before and giving the power tracks for this layer. The wiring pattern and the wiring width, as well as the distance (or pitch) is freely choosable. It should be clear to those skilled in the art that different patterns will be yield different power track efficiency depending on a respective design.
In a second alternative illustrated with reference to figure 11 a so-called "channel-based" grid is overlaid over free tracks, as identified by the present invention.
   A channel is hereby understood to be a number of M wiring tracks wide, wherein M is a multiple of the track width, e.g. 8<M <100.

Wire width and wire pitch are choosable, as described above. Then a channel pattern as defined above, or a different one, like "GVGV" or any other power net name can be used. Then a loop over all channels takes place including a first step, in which the net is selected from the channel pattern, followed by a second step, in which a free track in the current channel is searched and found. The search starts at a definable preferred point (for example left most, right most, mid most, random). The first free track closest to that point within a channel is selected for power fill.

In figure 11, in channel n (most left channel) the preferred track 90A is identical to the generated track 90A. In channel n+1 said preferred track 90B is found first on the left half of the channel.

In the next channel the algorithm starts in the middle of the channel (see preferred track) and finds the next free track a small step left thereof. Thus, the next power fill would be generated at position 90C. In the rightmost channel, the algorithms starts in the rightward direction and finds track 90D free and ready for power fill.
One or more wires up to a complete fill may be laid by this step. The target amount of wires in a channel and the channel width are choosable, and may be driven by the required metal density for the CMP process or the required metal porosity for additional signal/clock wiring tracks at the next hierarchy level.

The result of the additional power wiring 50 can also be seen in figure 9 in context with figure 8, by inspecting the vertical broken-dotted lines (pattern -..-..-..), in figure 9, as it is indicated by a circle including the start points of said additional wiring and an arrow 50. It should be noted that the additional wiring 50 is limited to free tracks in -white chip - areas 82, which are not yet filled - be that by signal wiring 80 or pre-existing "basic" power wiring 40, or by GND wiring shown in figure 8, or other wiring, for instance clock wiring, which is not shown in figure 8.

Figure 10 additionally shows the additional vias dropped advantageously due to the inventional method.

With reference back again to figure 7, as a person skilled in the art may appreciate, the loop-body from steps 422 to 426 is repeatedly run.

Then, in a block of steps 430 the iteration over all layers takes place from bottom to top or vice versa including a step 432 and an optional step 434.

In step 432 the vias are dropped at the respective metal crossings between the added grids of the same voltage level on different layers. For example a ground via is laid, if a freshly laid ground track on a layer Mx crosses any ground track on a layer Mx-1, i.e. the metal layer just below. The same is true of course for VDD vias and intermediate power levels (iteration bottom-to-top or vice versa).

In a second alternative a ground via is dropped if the freshly laid ground track on a layer Mx crosses any ground metal at the layer just above (Mx+1). Again, the same is true for other voltage levels grids.

Optionally, and with additional reference to figure 12, in a step 434 the so-called "Antennae" on power wires 130 or GND wires 132 are either cut back - see the "cutback" areas in figure 12, or extended, see the extension areas, both on the left side of the drawing, in order to serve as a connection between two macros, or units, respectively, if the area just subjected to the inventional method shall be duplicated and put together at a common margin line, which is depicted on the right side of the drawing.

The results from running the algorithm above are then verified through power analysis (power drop, noise).

The present invention can be realized in hardware, software, or a combination of hardware and software. A chip design tool according to the present invention can be realized in a centralized fashion in one computer system or in a distributed fashion where different elements are spread across several interconnected computer systems. Any kind of computer system or other apparatus adapted for carrying out the methods described herein is suited. A typical combination of hardware and software could be a general purpose computer system with a computer program that, when being loaded and executed, controls the computer system such that it carries out the methods described herein.
The present invention can also be embedded in a computer program product, which comprises all the features enabling the implementation of the methods described herein, and which - when loaded in a computer system - is able to carry out these methods.

Computer program means or computer program in the present context mean any expression, in any language, code or notation, of a set of instructions intended to cause a system having an information processing capability to perform a particular function either directly or after either or both of the following
a) conversion to another language, code or notation;
b) reproduction in a different material form.

## Claims

1. A method applied during a multi-layer, Integrated Circuit (IC) chip design procedure, in which the chip design is developed in a predetermined sequence of multiple workflow design phases effective at least on either of macro level, unit level and chip level, wherein each design phase imposes design constraints for the next higher-level phase by occupying respective phase-specific chip layer areas, **characterized by**:
a) offering (424) in a current design phase a view into at least one of respective preceding design phases, said view disclosing details of the metallization layers and enabling for recognizing in said preceding design phase free chip layer areas (82), which are not yet occupied by circuit means,
b) offering to perform further design optimization by a reprocessing (426) of said recognized free areas (82), created by one of said preceding design phases.

2. The method according to claim 1, wherein said reprocessing includes the provision of an additional metallization (50) within said free chip areas (82).

3. The method according to claim 1, applied for improving electrical properties in chip wirings, in which method a first design phase is provided for implementing a basic form of a power grid (40) in a power grid layer (M4) for supplying the electrical circuits with electrical power, and one or more subsequent design phases are provided for signal wiring and clock wiring, **characterized by** said view-offering step (424) and said reprocessing step (426) may be used for implementing an additional power wiring (50) within said layer of the basic power grid.

4. The method according to claim 1, applied for improving electrical properties in chip wirings,
**characterized by** applying during one or more of said design steps a sequence of steps comprising:
a) determining (410) start and stop layers for the method,
b) for every layer (420):
b1) determining (422) an active layer region, in which the method shall be applied,
b2) determining (424) free tracks,
b3) overlaying (426) an additional wiring pattern (50) within said predetermined layer region,
b3a) from the intersections between said free tracks and said active region, or
b3b) from free tracks to be found within a channel-based grid,
c) dropping vias (432) at metal crossings defined in the projective view over multiple layers by the intersection of the grid inserted in a current layer (M4) with the respective electrically equivalent grid on the next layer below (M3) and upside (M5) of said current layer.

5. The method according to claim 2, wherein the additional power wiring (50) is implemented for supplying the chip with its primary supply voltage.

6. The method according to claim 2, wherein the additional power wiring (50) is implemented for supplying the chip with a secondary supply voltage.

7. The method according to claim 1, wherein the additional power (50) wiring is implemented for supplying the chip with an additional ground level grid.

8. The method according to claim 1, wherein the additional power wiring (50) is implemented for supplying the chip with an additional clock signal grid.

9. A computer system having an IC chip designed according to one of the preceding claims 1 to 8.

10. A computer program for execution in a data processing system for designing a multi-layer, digital Integrated Circuit Chip, in which the chip design is developed in a predetermined sequence of multiple workflow design stages effective at least on either of macro level, unit level and chip level, wherein each design stage imposes design constraints for the next higher-level stage by occupying respective stage-specific chip layer areas, **characterized by** comprising a functional component for performing the steps of :
a) offering (424) in a current design phase a view into at least one of respective preceding design phases, said view disclosing details of the metallization layers and enabling for recognizing in said preceding design phase free chip layer areas (82), which are not yet occupied by circuit means,
b) offering to perform further design optimization by a reprocessing (426) of said recognized free areas (82), created by one of said preceding design phases,
when said computer program code portions are executed on a computer.

11. A computer program product stored on a computer usable medium comprising computer readable program means dedicated for execution in a data processing system for designing a multi-layer, digital Integrated Circuit Chip, in which the chip design is developed in a predetermined sequence of multiple workflow design stages effective at least on either of macro level, unit level and chip level, wherein each design stage imposes design constraints for the next higher-level stage by occupying respective stage-specific chip layer areas, **characterized by** comprising a functional component for performing the steps of:
a) offering (424) in a current design phase a view into at least one of respective preceding design phases, said view disclosing details of the metallization layers and enabling for recognizing in said preceding design phase free chip layer areas (82), which are not yet occupied by circuit means,
b) offering to perform further design optimization by a reprocessing (426) of said recognized free areas (82), created by one of said preceding design phases,
when said computer program product is executed on a computer.
